# EUROPEAN PATENT SPECIFICATION

(11) **EP 0 461 587 B1**
(45) Date of publication and mention of the grant of the patent: **13.09.1995**
(21) Application number: 91109481.1
(22) Date of filing: 10.06.1991
(51) Int. Cl.: F02B 61/02, F02M 35/16, F01L 7/06

(54) **Motorcycle**
Motorfahrrad
Cycle à moteur

(30) Priority: 09.06.1990 JP 150916/90
(43) Date of publication of application: 18.12.1991
(73) Proprietor: YAMAHA HATSUDOKI KABUSHIKI KAISHA, Iwata-shi Shizuoka-ken, 438 (JP)
(72) Inventor: Shiobara, Shoichi, c/o 2500 Shingai, Shizuoka-ken 438 (JP)
(74) Representative: Grünecker, Kinkeldey, Stockmair & Schwanhäusser Anwaltssozietät

(56) References cited:
- CH-A- 485 115
- DE-C- 845 168
- GB-A- 2 145 471
- US-A- 3 698 368
- US-A- 4 723 617
- PATENT ABSTRACTS OF JAPAN, vol. 9, no. 249, (M-419)[1972], 5th October 1985; & JP-A-60 101 212
- PATENT ABSTRACTS OF JAPAN, vol. 9, no. 261, (M-422)[1984], 18th October 1985; & JP-A-60 107 421
- PATENT ABSTRACTS OF JAPAN, vol. 10, no. 73, (M-463)[2130], 22nd October 1986; & JP-A-60 216 036

## Description

This invention relates to a motor cycle having a frame, a two cycle internal combustion engine supported by said frame such that the crankshaft of the engine extends transversely to the frame, a crankcase chamber of said engine and an inlet device comprising an induction passage serving an air inlet port communicating to said crankcase chamber.

One common application for two cycle engines is in motorcycles. In conjunction with motorcycle applications, if a rotary valve is employed it is the normal practice to induct the charge into the crankcase at one side of the crankcase. With the normal disposition of the engine in the motorcycle, this places the induction system at the side of the motorcycle. The disadvantage with such side placement is that the induction system may interfere with the amount at which the motorcycle can be leaned by the rider when cornering.

The advantages of two cycle crankcase compression internal combustion engines are well known. One of the main advantages of this type of engine is the simplicity of the engine. Frequently these engines are operated with nothing more than a reed type check valve into the crankcase chamber and a porting arrangement that accommodates the transfer of the charge from the crankcase chamber to the combustion chamber of the engine. However, it has been recognized that performance may be improved, in some instances, through the use of some form of valve that rotates in unison with the crankshaft and which controls the opening and closing of a port that communicates the induction system with the crankcase chamber or the combustion chamber.

A wide variety of fixed type valve mechanisms have been proposed for this purpose. However, it has been acknowledged that the performance of the engine can be improved by employing a variable valve timing for such valves. The type of variable valve timing mechanism previously incorporated have utilized a pair of blade type rotating valve plates that move relative to each other to change the timing events. These types of device both retard the point at which the port opens and advance the time at which the port closes. However, it may not always be desirable to provide such extreme changes in both directions of port operation. Furthermore, the prior art type of arrangements have employed centrifugal governors for their operation and hence absorb power from the engine in order to achieve the valve operation and the change in timing.

A conventional internal combustion engine having a disc inlet valve is known from GB-A-2 145 471. The disc inlet valve is driven by the crankshaft, the angular relationship between the crankshaft and the disc inlet valve being adjustable to provide a variable valve timing.

US-A-4 723 617, which is considered to represent closest state of the art, shows a motorcycle having a two-cycle internal combustion engine supported by a frame, a crankshaft of the engine extending transversely to the frame. An induction system comprising an induction passage communicates with a crankcase chamber of said engine.

However, said motorcycle is disadvantageous in that the induction system of the engine does not provide high performance in all phases of operation because of the way of fuel injection and controlling of the intake opening.

It is therefore an objective of this invention to provide a motorcycle having an improved and simplified induction system and fuel injection system with cooperating throttle valve arrangement for a two cycle engine utilized to power the motorcycle with high performance which motorcycle will be compact and yet easy to service.

The afore-mentioned objective is performed according to the present invention by improving a motorcycle as indicated above in that the induction passage comprises a generally vertically extending intake pipe to serve via a throttle body the air inlet port facing one side of the motorcycle and which is controlled by a rotary valve element, and that a fuel injector is horizontially disposed at the throttle body spraying in a generally horizontal direction to the path of air flow.

Preferred embodiments of the present invention are laid down in the subclaims.

Hereinafter, the present invention is illustrated and explained in greater detail by a preferred embodiment thereof in conjunction with the accompanying drawings, wherein:
Figure 1 is a side elevational view of a motorcycle powered by an internal combustion engine constructed in accordance with an embodiment of the invention, with portions broken away so as to more clearly show the construction.
Figure 2 is a front elevational view of the motorcycle, with portions shown in cross section and other portions shown in phantom and showing how the induction system lends itself to leaning of the motorcycle when cornering.
Figure 3 is an enlarged side elevational view of the engine.
Figure 4 is a cross-sectional view taken along the line 4-4 of Figure 3.
Figure 5 is a cross-sectional view taken along the line 5-5 of Figure 3.
Figure 6 is a cross-sectional view taken along the line 6-6 of Figure 3.
Figure 7 is a cross-sectional view taken along the line 7-7 of Figure 4.
Figure 8 is a cross-sectional view taken along the line 8-8 of Figure 3.
Figure 9 is a cross-sectional view taken along the line 9-9 of Figure 3.
Figure 10 is a cross-sectional view taken along the line 10-10 of Figure 9.

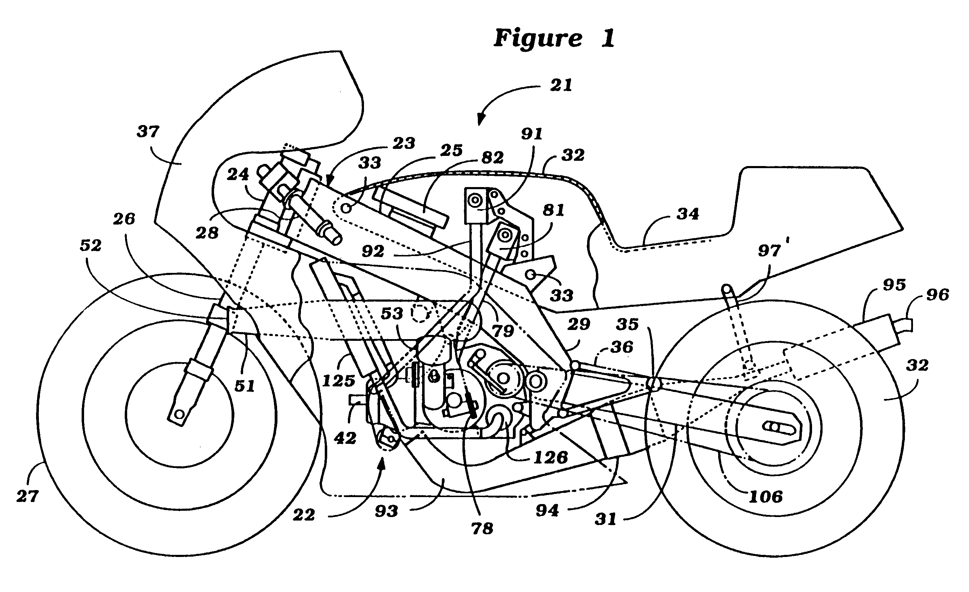

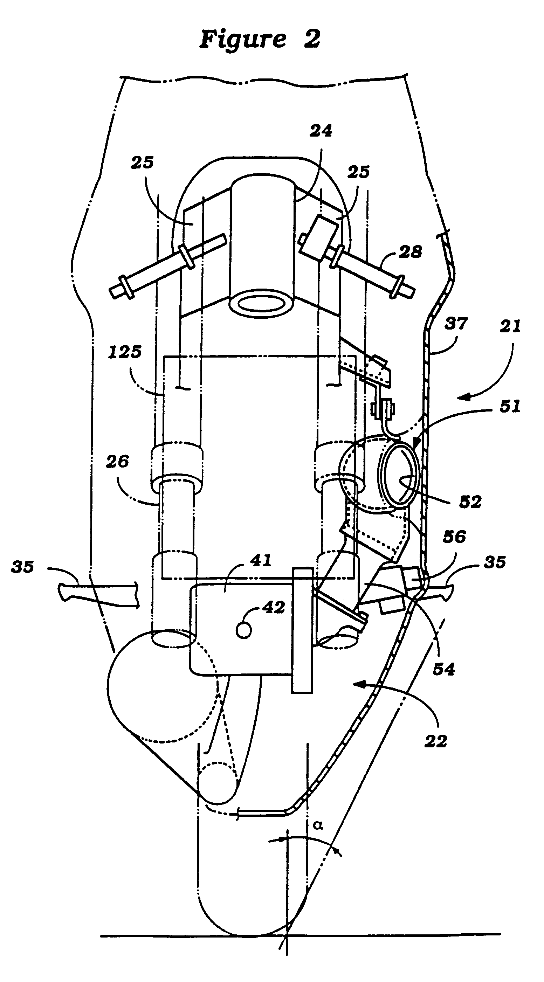

Referring now in detail to the drawings and initially to Figures 1 and 2, a motorcycle constructed in accordance with an embodiment of the invention is identified generally by the reference numeral 21.

The motorcycle 21 has a frame assembly, indicated generally by reference numeral 23, and which is a type that has a head pipe 24 and a pair of fabricated main frame members 25 that extend rearwardly and downwardly from the head pipe 24. A front fork assembly 26 is carried by the head pipe 24 for steering movement and rotatably journals a dirigible front wheel 27 in a known manner. A handlebar assembly 28 is carried at the upper end of the fork assembly 26 for steering of the front wheel 27 in a well known manner.

At the lower and rear ends of the main frame members 25 there is provided a weldment assembly 29 which provides a pivotal support for a trailing arm 31 that supports a rear wheel 32.

A combined seat and body member 32 is mounted on the frame assembly 23 in an appropriate manner, as by mounting points 33. The seat assembly 32 has a depressed portion 34 so as to accommodate a rider. A rider seated in the portion 34 may place his legs on foot pegs 35 carried by extensions 36 that are affixed appropriately to the weldment 29.

A body and cowling assembly 37 is carried forwardly and on the sides of the frame assembly 23 so as to offer streamlining and some wind protection for the rider.

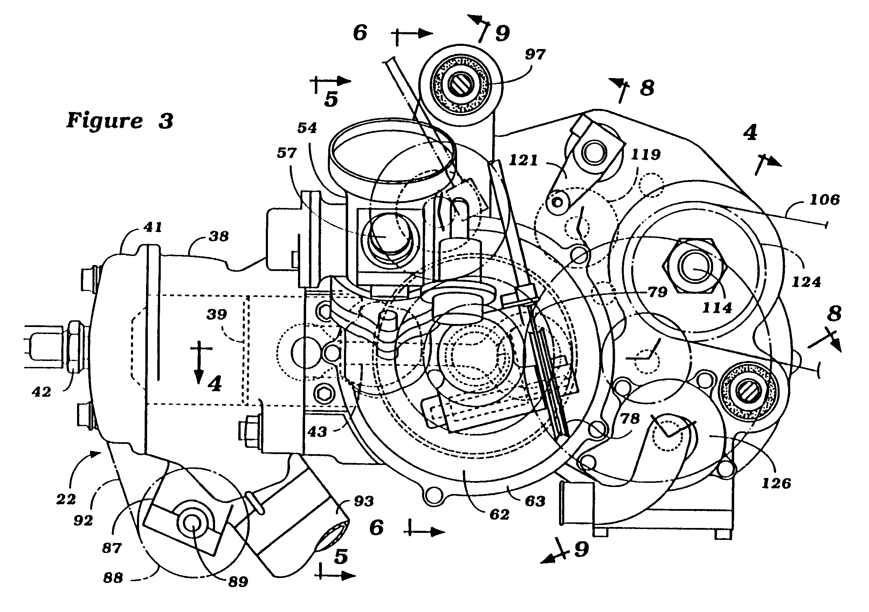

Referring now in detail primarily to Figures 3, 4 and 9, the engine 22 is, as aforenoted, of the two cycle crankcase compression type. In the illustrated embodiment, the engine 22 is a single cylinder engine but, as will be readily apparent, the invention may be employed in conjunction with engines having other cylinder types and cylinder orientations. However, certain facets of the invention have particular utility in engines of a type that are mounted in the motorcycle 21 so that the cylinder block, indicated generally by the reference numeral 38, extends horizontally with its cylinder bore (not shown) a mounting piston 39 that reciprocates about a generally longitudinal axis. This arrangement permits a low center of gravity, as should be readily apparent. A cylinder head assembly 41 is affixed to the cylinder block 38 in a known manner and mounts a spark plug 42 that extends generally in a forward direction and which is fired by an appropriate ignition system (not shown).

The piston 39 is connection to one end of the connecting rod 43 which connecting rod has its opposite end journaled on a throw of a crankshaft, indicated generally by the reference numeral 44. The crankshaft 44 is journaled, in the illustrated embodiment, by means of a pair of anti-friction bearings 45 and 46 within a crankcase chamber 47 formed by the cylinder block 38 and a combined crankcase transmission case, indicated generally by the reference numeral 49. As is conventional with motorcycle practice, the crankshaft 44 rotates about a horizontally disposed axis which extends generally transversely across the motorcycle 21 from side to side.

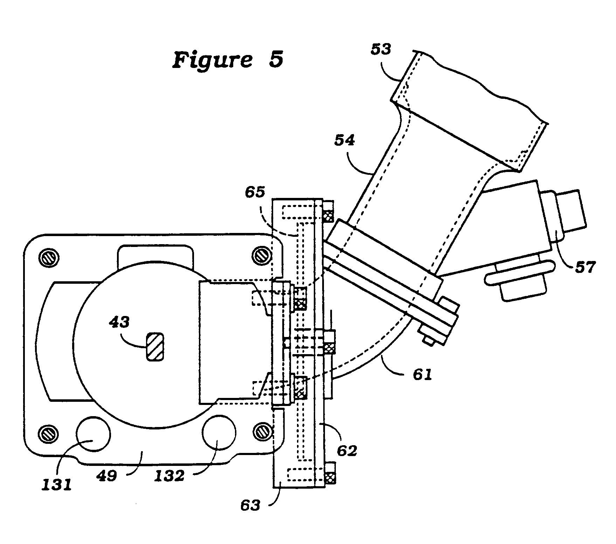

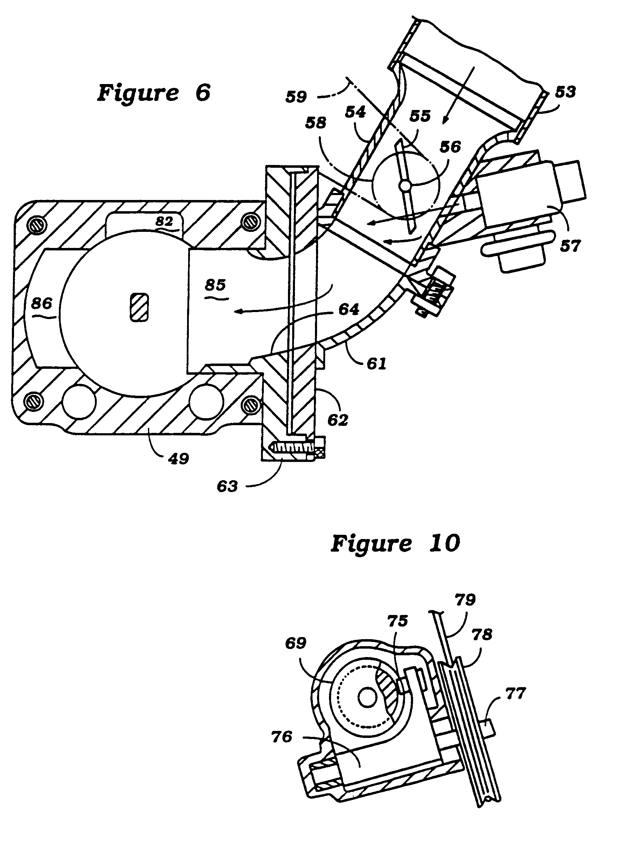

The engine 22 is provided with an induction system which includes an inlet device 51 (Figures 1 and 2) which is generally elongated and which extends along one side of the motorcycle 21, the left side in the illustrated embodiment. The air inlet device 51 has a forwardly facing inlet opening 52 for receiving ram air and delivering it rearwardly. At the rearward end of the inlet device 51, there is provided a generally downwardly extending section 53 which is fitted onto a throttle body shown in most detail in Figures 5 and 6 and indicated generally by the reference numeral 54. The throttle body 54 rotatably journals a throttle valve 55 upon a throttle valve shaft 56. The throttle valve shaft 56 extends in a generally horizontal direction.

A fuel injector, indicated by the reference numeral 57, is mounted in the throttle body 54 and sprays in a generally horizontal direction to the path of air flow as shown best in Figure 6. This will insure good mixing. Also, it should be noted that the throttle body 54 and inlet device portion 53 extend in a generally vertical direction so as to form a downdraft type of induction system. As may be best seen in Figure 2, this arrangement is such that the induction system will be spaced inwardly within the body 37 and not offer any significant interference to the leaning of the motorcycle through an angle α as shown in Figure 2. Thus, unlike prior art constructions embodying horizontally disposed induction systems, the arrangement provides a very compact assembly without offering any flow resistance and, at the same time, providing good induction efficiency and the ability to lean, as aforenoted.

The throttle valve shaft 56 has affixed to an exposed outer end a throttle drum 58 that is connected by means of a wire actuator 59 to a throttle grip (not shown) for controlling the speed of the engine in a known manner.

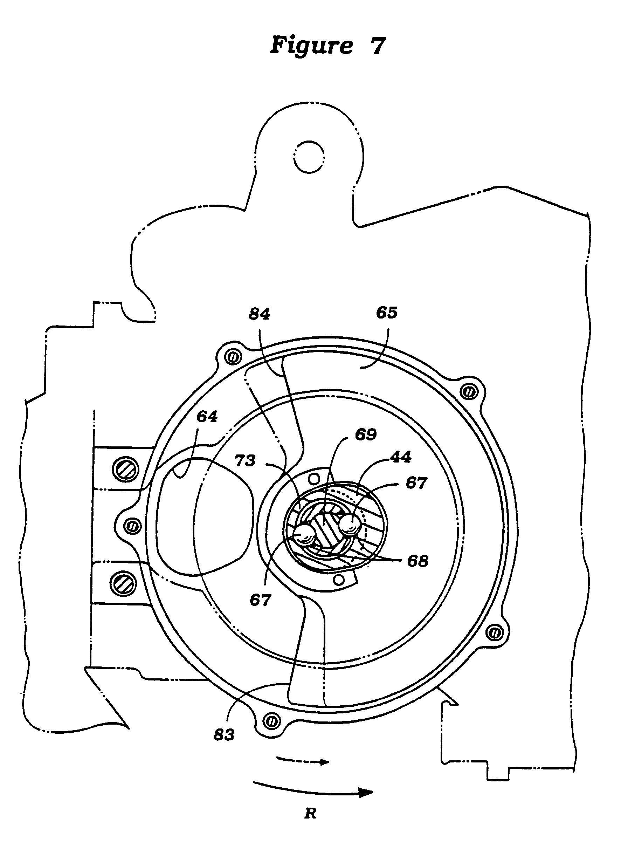

The throttle body 54 communicates with an elbow pipe 61 having a flange 62 that is connected to a rotary valve housing 63 which is, in turn, affixed in a suitable manner to the side of the crankcase 49. As may be seen in Figure 7, the housing 63 and crankcase member 49 define an air inlet port 64 having a cross-sectional configuration as best seen in Figure 7. A rotary valve element 65 is affixed to the crankshaft 44, in a manner to be described, and controls the opening and closing of the air inlet port 64 and, accordingly, the communication of the intake system thus far described with the crankcase chamber 47 of the engine. By use of the rotary valve 65 rather than the conventionally used type of reed type valves for precluding reverse flow, a better induction efficiency can be achieved and the timing of opening and closing of the port 64 can be more accurately controlled. In addition, the connection of the valve 65 to the crankshaft 44 is such so as to permit the timing events to be adjusted so as to suit engine performance and engine running conditions.

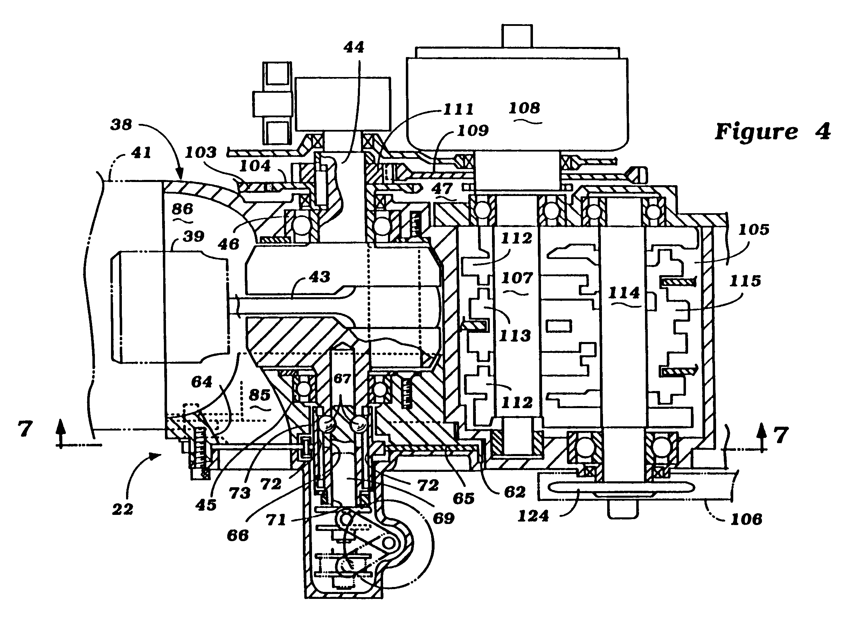

Referring now primarily to Figures 4, 7 and 9, it will be seen that the crankshaft 44 has a pair of elongated slots 66 in which balls 67 are positioned. The balls 67 are, in turn, received within detent recesses 68 formed in a plunger 69 that is slidably supported within a bore 71 formed in the inlet side of the crankshaft 44. The balls 67 also are received within slots 72 formed in a hub 73 of the rotary valve 65. Either or both of the slots 66 or 72 are helically configured so that if the plunger 69 is moved axially within the crankshaft 44, in a manner as will be described, the phase angle between the valve 65 and the crankshaft 44 will be altered.

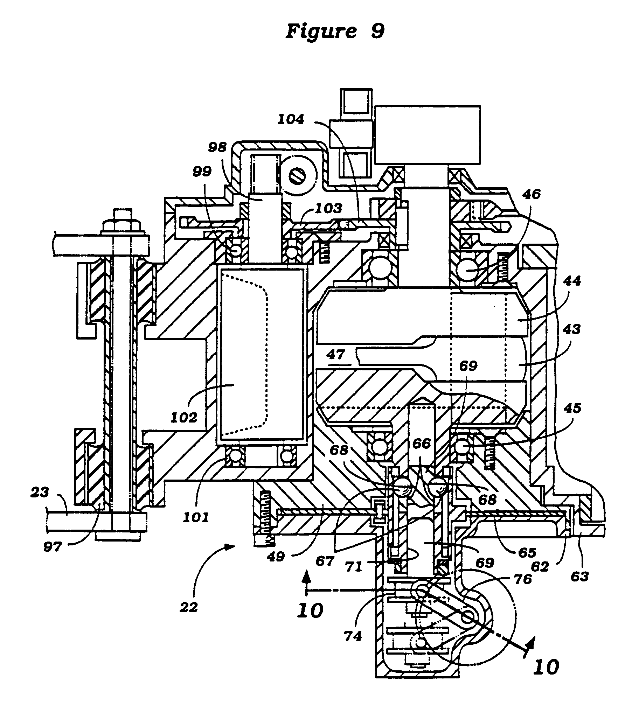

The outer end of the plunger 69 is formed with a grooved portion 74 to receive a follower pin 75 of a cam actuator lever 76. The actuator lever 76 is rotatably journaled within a boss formed in the flange 62 and is affixed to a shaft 77 to which an actuating pulley 78 is affixed. A wire actuator 79 connects this pulley 78 to a servo motor 81 (Figure 1) that is positioned beneath the seat 32 and which is controlled by an ECU 82. As the pulley 78 and follower arm 76 are rotated from one position as shown in solid line views in Figures 4 and 9 to the phantom line view position, the cooperation of the balls 67 in the helical slots 66 and/or 72 will cause the phase angle of the plate valve 65 to change from the solid line view shown in Figure 7 to the phantom line view shown in this figure. As a result in this angular change, the intake port 64 will be opened at an earlier point, assuming a counterclockwise direction of rotation as seen in Figure 7 where the direction of rotation is indicated by the arrow R, and to be closed at an earlier point. In this way, the time of opening and closing of the intake port 64 can easily be changed since the leading and trailing edges 83 and 84 of the valve 65 will open and close the port 64 at different angular relationships. Thus, a greater degree of overlap can be achieved when operating at high speeds and high loads than when low speeds and low loads and engine performance can be improved. Also, since the servo motor 81 is utilized to operate the valve 65, no power of the engine will be consumed by this operation.

As may be seen in Figures 5 and 6, the port 64 leads into a first scavenge passage 85 and additional scavenge passages 86 and 87 communicate the crankcase chamber with the area above the piston as is conventional with two cycle practice for transferring the charge from the crankcase chamber 47 to the combustion chamber for firing by the spark plug aforenoted.

The burned charge is discharged through an exhaust port (not shown) in which an exhaust control valve is positioned. This exhaust control valve is contained within an exhaust control valve housing 87 and operates to control the opening and closing of the exhaust port relative to the motion of the piston 39, as is well known. A pulley 88 is affixed to the shaft 89 of this exhaust control valve and is operated by a further servo motor 91 positioned beneath the seat 32 and actuated by means of wire actuators 92. As a result, the timing of both the intake and exhaust ports can be tuned by a suitable control circuitry and strategy so as to optimize engine performance.

The exhaust gases which exit past the exhaust control valve, as thus far described, pass into an exhaust pipe 93 that extends from the cylinder block 38 downwardly and then rearwardly to join into an expansion chamber 94 and eventually a muffler 95 for discharge to the atmosphere through a tail pipe 96. An exhaust hanger 97' suspends the exhaust system thus far described from the frame 23 in a known manner.

The engine 22 is mounted within the frame assembly 23 in any suitable manner and one of the supports is provided by a boss assembly that receives an elastomeric support 97 (Figures 3 and 9) for carrying the engine in the frame 23.

The engine is also provided with a balancer shaft 98 that is journaled within the crankcase 49 by means of a pair of spaced apart bearings 99 and 101 and which carries an eccentric mass 102 for balancing the engine. This eccentric mass 102 is driven at crankshaft speed by means of a gear 103 affixed to the shaft 98 and a gear 104 affixed suitably to the crankshaft 44.

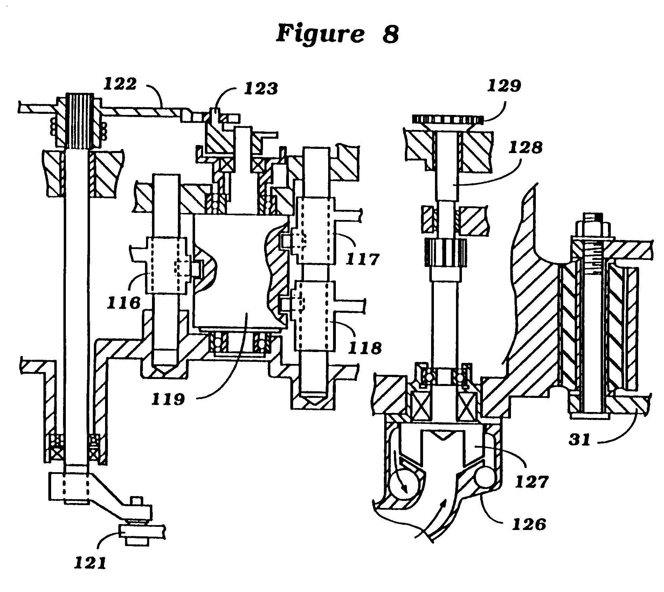

As is typical with motorcycle practice, a change speed transmission, shown in most detail in Figures 4 and 8 and identified by the reference numeral 105, is driven by the engine crankshaft 44 for driving the rear wheel 32 through a drive chain 106 (Figure 1). This change speed transmission 105 includes a primary shaft 107 that is driven from the crankshaft 44 by a clutch 108. The driven disc of the clutch 108 is affixed for rotation with a gear 109 which meshes with a gear 111 that is fixed to the crankshaft 44 adjacent the gear 104. A plurality of gears 112 are journaled for rotation on the primary shaft 107 and can be clutched into engagement with the shaft through a dog clutching arrangement 113. The primary gears 112 are intermeshed with driven gears carried on a secondary transmission 114 and which are coupled to this shaft by means of a dog clutching sleeve 115. The dog clutching sleeves 113 and 115 are operated by means of shift forks 116, 117 and 118 by means of a shift drum 119 that is rotatably journaled within the transmission in a known manner. A shift pedal 121 is connected to the shifting drum 119 by means of a cam ring 122 and follower 123 for rotating the drum 119 and selecting the desired speed ratio for the secondary shaft 114.

The exposed end of the secondary shaft 114 carries a drive sprocket 124 that drives the chain 106.

In the illustrated embodiment, the engine 22 is water cooled and to that end a cooling radiator 125 (Figure 1) is carried by the frame assembly 23. Coolant is circulated through the radiator 125 and cooling jacket of the engine 22 by a coolant pump 126 mounted to the rear of the transmission and which appears best in Figure 8. This water pump 126 includes an impeller 127 that is fixed to a shaft 128 which is suitably driven from the crankshaft 44 and which has a drive gear 129 for this purpose.

Portions of the engine cooling jacket appear in Figure 5 wherein the water conduits therefor are indicated by the reference numerals 131 and 132.

From the foregoing description it should be readily apparent that the induction system for the engine permits the engine to be employed easily in a motorcycle that can be leaned to a large extent for cornering without interference from the induction system due to its updraft nature. Also, the fuel injector for the induction system is positioned in such a way that it can inject almost at a cross flow to the air flow through the induction passage so as to improve fuel atomization. In addition, a rotary valve is provided for controlling the opening and closing of the intake port and, accordingly, permitting a power increase while at the same time affording adjustment of valve timing in a simple manner and through the power of a servo motor rather than extracting power from the driving engine.

## Claims

1. A motor cycle (21) having a frame (23), a 2-cycle internal combustion engine (22) supported by said frame (23) such that the crankshaft (44) of the engine (22) extends transversely to the frame (23), a crankcase chamber (47) of said engine (22) and an inlet device (51) comprising an induction passage serving an air inlet port (64) communicating to said crankcase chamber (47), **characterised in that**, the induction passage comprises a generally vertically extending intake pipe (53) to serve via a throttle body (54) the air inlet port (64) facing one side of the motorcycle (21) and which is controlled by a rotary valve element (65), and that a fuel injector (57) is horizontially disposed at the throttle body (54) spraying in a generally horizontal direction to the path of air flow.

2. A motor cycle as claimed in claim 1, **characterised in that**, said intake pipe (53) extends along one side of the motor cycle (21) to the air inlet port (64).

3. A motor cycle as claimed in claims 1 or 2**, characterised in that**, a throttle valve (55) is disposed rotatably about a horizontal axis (56) in said throttle body (54) and is disposed adjacent to the fuel injector (57).

4. A motorcycle as claimed in at least one of the preceding claims 1 to 3, **characterised in that** the rotary valve element (65) is rotatably journaled relative to said intake port (64) for sequentially opening and closing said intake port (64), and drive means (66, 67, 68, 69, 72, 73) for driving said rotary valve element (65) in sequence with a crankshaft (44) of the engine (22), said drive means (66, 67, 68, 69, 72, 73) including means (66, 68, 69, 72) for varying the angular relationship of said rotary valve element (65) to said crankshaft (44) for adjusting the timing of the events of the intake port (64).

5. A motorcycle as claimed in at least one of the preceding claims 1 to 4, **characterised in that** the rotary valve element is a single valve plate (65) which is disposed coaxially with the crankshaft (44).

6. A motorcycle as claimed in at least one of the preceding claims 1 to 5, **characterised in that** the valve plate (65) is coupled to the crankshaft (44) by a helical driving connection (66, 67, 69, 72) for achieving the variation in angular relationship by rotating the helical connection (66, 67, 69, 72).

7. A motorcycle as claimed in claim 6, **characterised in that** the helical connection includes a plunger member (69) slidably supported within the crankshaft (44) and carrying a pair of detent balls (67).

8. A motorcycle as claimed in claim 7, **characterised by** a power means (81) other than the engine (22) for operating the plunger members (69).

9. A motorcycle as claimed in at least one of the preceding claims 5 to 8, **characterised by** a power means (81) independent of the engine (22) for adjusting the angular relationship of the valve plate (65) to the crankshaft (44).

10. A motorcycle as claimed in claims 8 or 9, **characterised by** a CPU (82) for operating the power means (81) to provide variations in valve timing in response to engine characteristics.

## Patentansprüche

1. Kraftrad (21) mit einem Rahmen (23), einem Zweitaktverbrennungsmotor (22), der durch den Rahmen (23) derart gelagert ist, daß sich die Kurbelwelle (44) des Motors (22) quer zu dem Rahmen (23) erstreckt, wobei eine Kurbelgehäusekammer (47) des Motors (22) und eine Einlaßvorrichtung (51) einen Einlaßkanal aufweisen, der eine Lufteinlaßöffnung (64) beschickt, die mit der Kurbelgehäusekammer (47) verbunden ist, **dadurch gekennzeichnet**, daß der Einlaßkanal ein sich im wesentlichen vertikal erstreckendes Einlaßrohr (53) umfaßt, um über einen Drosselkörper (54) die Lufteinlaßöffnung (64) zu beschicken, die zu einer Seite des Motorrads (21) hin liegt und durch ein Drehventilelement (65) gesteuert ist, und daß eine Kraftstoffeinspritzvorrichtung (57) horizontal an dem Drosselkörper (54) angeordnet ist, wobei diese zu dem Weg der Luftströmung in einer im wesentlichen horizontalen Richtung einsprüht.

2. Kraftrad nach Anspruch 1, **dadurch gekennzeichnet**, daß sich das Einlaßrohr (53) entlang einer Seite des Kraftrads (21) zu der Lufteinlaßöffnung (64) erstreckt.

3. Kraftrad nach Anspruch 1 oder 2**, dadurch gekennzeichnet**, daß ein Drosselventil (55) drehbar um eine horizontale Achse (56) in dem Drosselkörper (54) angeordnet und neben der Kraftstoffeinspritzvorrichtung (57) liegend angeordnet ist.

4. Kraftrad nach zumindest einem der vorhergehenden Ansprüche 1 bis 3**, dadurch gekennzeichnet**, daß das Drehventilelement (65) zum aufeinanderfolgenden Öffnen und Schließen der Einlaßöffnung (64) relativ zu der Einlaßöffnung (64) drehbar gelagert ist, und durch eine Antriebseinrichtung (66, 67, 68, 69, 72, 73) zum Antreiben des Drehventilelementes (65) im Gleichlauf mit einer Kurbelwelle (44) des Motors (22), wobei die Antriebseinrichtung (66, 67, 68, 69, 72, 73) eine Einrichtung (66, 68, 69, 72) aufweist zur Veränderung der Winkelbeziehung zwischen dem Drehventilelement (65) und der Kurbelwelle (44) zum Einstellen der Öffnungs- und Schließzeitpunkte der Einlaßöffnung (64).

5. Kraftrad nach zumindest einem der vorhergehenden Ansprüche 1 bis 4, **dadurch gekennzeichnet**, daß das Drehventilelement eine einzelne Ventilplatte (65) ist, die mit der Kurbelwelle (44) koaxial angeordnet ist.

6. Kraftrad nach zumindest einem der vorhergehenden Ansprüche 1 bis 5, **dadurch gekennzeichnet**, daß die Ventilplatte (65) mit der Kurbelwelle (44) durch eine Spiralantriebsverbindung (66, 67, 69, 72) gekuppelt ist, um die Veränderung der Winkelbeziehung durch Drehen der Spiralverbindung (66, 67, 69, 72) zu erzielen.

7. Kraftrad nach Anspruch 6, **dadurch gekennzeichnet**, daß die Spiralverbindung ein Tauchkolbenteil (69) umfaßt, das in der Kurbelwelle (44) gleitbar gelagert ist und ein Paar Rastkugeln (67) führt.

8. Kraftrad nach Anspruch 7, **gekennzeichnet durch** eine von dem Motor (22) verschiedene Antriebseinrichtung (81) zur Betätigung des Tauchkolbenteils (69).

9. Kraftrad nach zumindest einem der vorhergehenden Ansprüche 5 bis 8, **gekennzeichnet durch** eine von dem Motor (22) unabhängige Antriebseinrichtung (81) zum Einstellen der Winkelbeziehung zwischen der Ventilplatte (65) und der Kurbelwelle (44).

10. Kraftrad nach Anspruch 8 oder 9, **gekennzeichnet durch** eine zentrale Recheneinheit (82) zur Betätigung der Antriebseinrichtung (81), um Veränderungen der Ventilzeitpunkte in Abhängigkeit von Motorcharakteristika vorzusehen.

## Revendications

1. Motocyclette (21) ayant un châssis (23), un moteur à combustion interne à deux temps (22) supporté par ledit châssis (23), de manière que le vilebrequin (44) du moteur (22) s'étende transversalement par rapport au châssis (23), une chambre de vilebrequin (47) dudit moteur (22) et un dispositif d'entrée (51) comprenant un passage d'aspiration desservant l'orifice d'admission d'air (64) communiquant avec ladite chambre de vilebrequin (47), caractérisée en ce que le passage d'aspiration comprend un tuyau d'admission (53) s'étendant globalement verticalement pour desservir, via un corps d'étranglement (54), l'orifice d'admission d'air (64) tourné d'un côté de la motocyclette (21) et qui est commandé par un élément de soupape (65) rotatif, et en ce qu'un injecteur de carburant (57) est disposé horizontalement au niveau du corps d'étranglement (54) pour effectuer une pulvérisation dans une direction globalement horizontale dans le trajet d'écoulement d'air.

2. Motocyclette selon la revendication 1, caractérisée en ce que ledit tuyau d'admission (53) s'étend le long d'un côté de la motocyclette (21) vers l'orifice d'admission d'air (64).

3. Motocyclette selon la revendication 1 ou 2, caractérisée en ce qu'une soupape d'étranglement (55) est montée tournante autour d'un axe horizontal (56) dans ledit corps d'étranglement (54) et est placée de manière adjacente à l'injecteur de carburant (57).

4. Motocyclette selon au moins l'une des revendications 1 à 3 précédentes, caractérisée en ce que l'élément de soupape (65) rotatif est monté tournant par rapport audit orifice d'admission (64), pour ouvrir et fermer séquentiellement ledit orifice d'admission (64), et par des moyens d'entraînement (66, 67, 68, 69, 72, 73) pour entraîner ledit élément de soupape (65) rotatif séquentiellement avec un vilebrequin (44) du moteur (22), lesdits moyens d'entraînement (66, 67, 68, 69, 72, 73) comprenant un moyen (66, 68, 69, 72) pour faire varier la relation angulaire dudit élément de soupape (65) rotatif avec ledit vilebrequin (44), afin de régler la distribution via l'orifice d'admission (64).

5. Motocyclette selon au moins l'une des revendications 1 à 4 précédentes, caractérisée en ce que l'élément de soupape rotatif est une plaque de soupape (65) unique qui est disposée coaxialement par rapport au vilebrequin (44).

6. Motocyclette selon au moins l'une des revendications 1 à 5 précédentes, caractérisée en ce que la plaque de soupape (65) est couplée au vilebrequin (44) par une liaison d'entraînement (66, 67, 69, 72) hélicoïdale, pour obtenir la variation de relation angulaire par la rotation de la connexion hélicoïdale (66, 67, 69, 72).

7. Motocyclette selon la revendication 6, caractérisée en ce que la connexion hélicoïdale comprend un organe formant piston (69) logé coulissant dans le vilebrequin (44) et supportant un couple de billes de verrouillage (67).

8. Motocyclette selon la revendication 7, caractérisée par un moyen d'alimentation (81) autre que le moteur (22) pour actionner les organes formant piston (69).

9. Motocyclette selon au moins l'une des revendications 5 à 8 précédentes, caractérisée par un moyen d'alimentation (81) indépendant du moteur (22) pour régler la relation angulaire de la plaque de soupape (65) avec le vilebrequin (44).

10. Motocyclette selon la revendication 8 ou 9, caractérisée par une unité de programme centrale (82) pour actionner le moyen d'alimentation (81), en vue d'obtenir des variations de prise d'états des soupapes en réponse à des caractéristiques du moteur.
